# EUROPEAN PATENT SPECIFICATION

(11) **EP 0 386 719 B1**
(45) Date of publication and mention of the grant of the patent: **25.11.1998**
(21) Application number: 90104325.7
(22) Date of filing: 07.03.1990
(51) Int. Cl.: G06F 12/04, G06F 12/06

(54) **Partial store control circuit**
Steuerungsschaltung zum Zugriff auf partiellen Speicher
Circuit de commande d'accès en mémoire partielle

(30) Priority: 08.03.1989 JP 55407/89
(43) Date of publication of application: 12.09.1990
(73) Proprietor: FUJITSU LIMITED, Kawasaki-shi, Kanagawa 211 (JP)
(72) Inventor: Ibi, Takashi, c/o Fujitsu Limited, Nakahara-ku, Kawasaki-shi, Kanagawa 211 (JP)
(74) Representative: Sunderland, James Harry

(56) References cited:
- US-A- 3 883 854
- PATENT ABSTRACTS OF JAPAN vol. 11, no. 219 (P-596)(2666) 16 July 1987 & JP-A-62 038 953 ( FUJITSU LTD ) 19 February 1987

## Description

The present invention relates to a partial-store control circuit used in a memory unit for example having a memory device divided into a plurality of memory banks so that access can be performed to the memory device, using a memory bank as a unit, through an interleave method.

In a memory unit of a computing system, an interleave method has been used for reducing practical access time of a memory device of the unit. When the interleave method is applied to the memory unit, a memory device in the memory unit is divided into a plurality of memory banks so that memory access to the respective memory banks can be performed partially in parallel in every memory cycle. To carry out the interleave method effectively, the access to the memory device is also divided in proportion to the number of memory banks provided and is performed by using a store-data pipeline and a bank-address pipeline both provided in the memory unit.

In recently proposed computing systems, dynamic random access memory (DRAM) is used for memory devices for reducing the cost of the systems. However, since DRAM requires a long access time, in comparison with static random access memory (SRAM), a great many stages must be provided in store-data pipeline and in the bank-address pipeline in order for the memory unit to operate in synchronisation with a central processing unit (CPU) of high processing speed. In particular, when a partial-store merge access, which is a recently-proposed memory access method for improving processing efficiency of a computing system, is applied to the memory unit, the amount of hardware needed for circuits for controlling the partial-store merge access increases greatly with increases in the number of stages of the store-data pipeline and the bank-address pipeline.

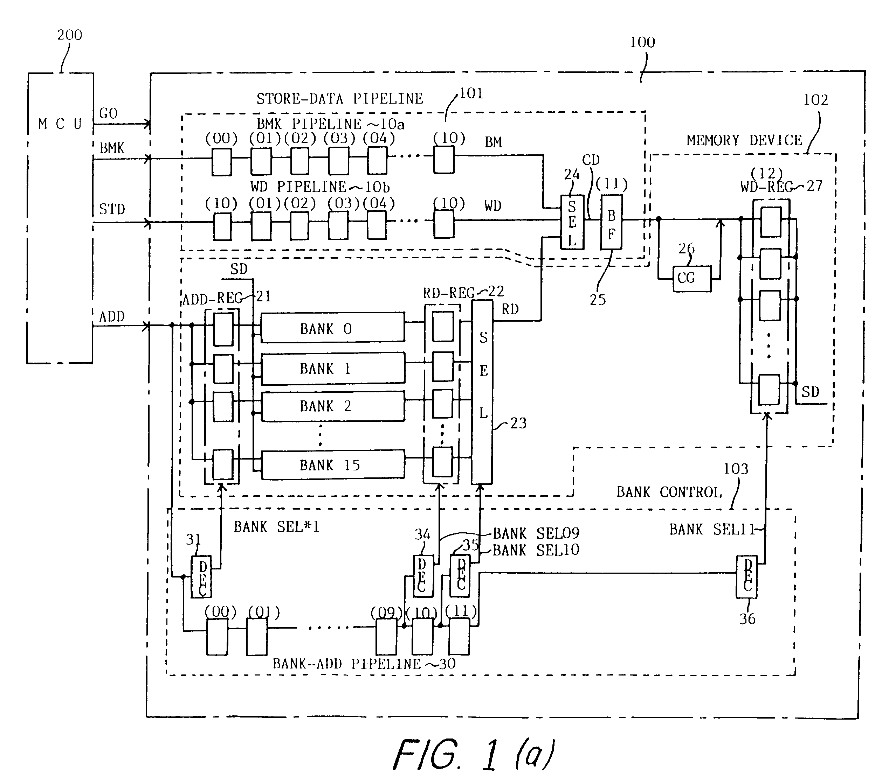

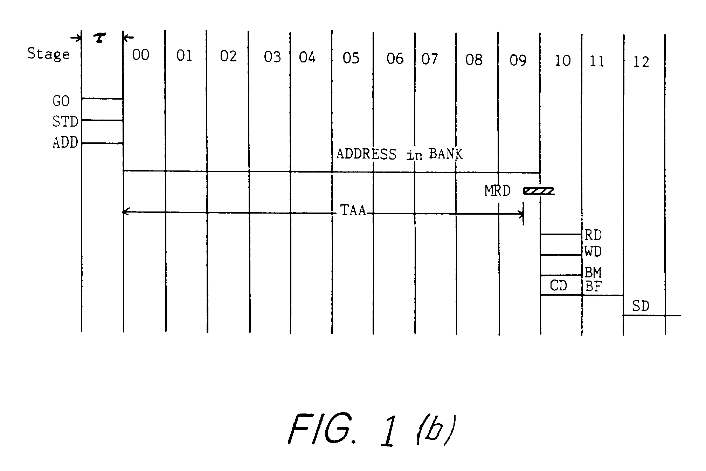

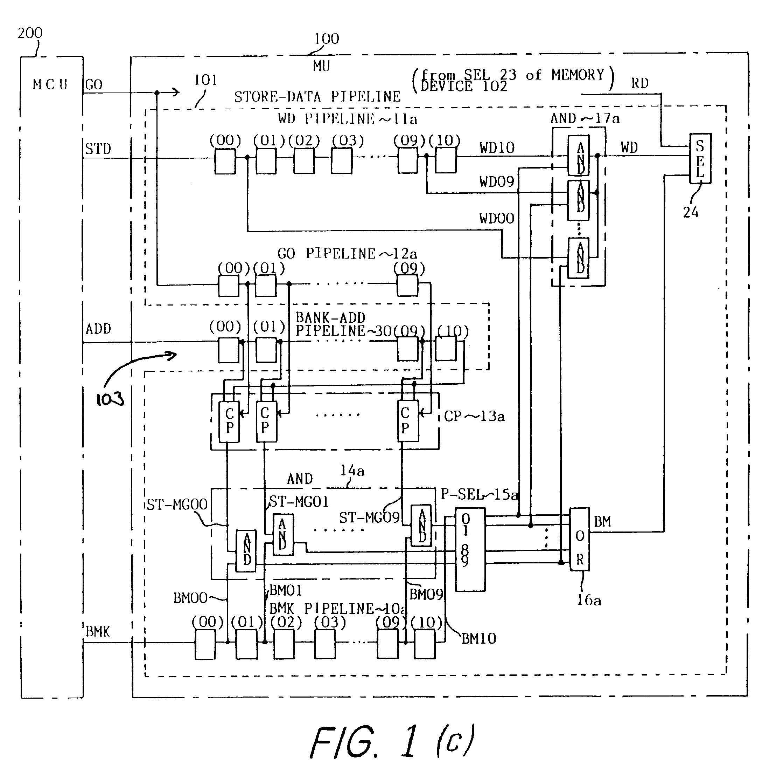

A memory unit including a partial-store control circuit will be explained with reference to Figs. 1(a), 1(b) and 1(c).

Fig. 1(a) illustrates main features of the constitution of such a memory unit (MU) 100. As shown in Fig. 1(a), MU 100 mainly consists of a memory device (MEMORY DEVICE) 102, a store-data pipeline (STORE-DATA PIPELINE) 101 and a bank-control (BANK CONTROL) 103. As shown by signal lines with reference signs GO, STD, ADD and BMK in Fig. 1(a), MU 100 is controlled by a memory control unit (MCU) 200. GO represents a command signal for starting a partial-store access in MU 100. STD represents store data consisting of one word in which at least one byte of data for partially storing in MEMORY DEVICE 102 is included. ADD represents a signal giving an address for STD to be partially stored in MEMORY DEVICE 102, and BMK represents a byte mark signal for specifying a byte position within STD where byte data for partially storing exists.

In this explanation, it will be assumed for simplicity that STD is one-word data consisting of four bytes and MEMORY DEVICE 102 is divided into sixteen memory banks (BANKs) as shown by BANK 0, 1, 2, ----, 14 and 15 in Fig. 1(a) so that each BANK includes a plurality of word data items.

ADD consists of a plurality of address bits in which four low-order bits specify a BANK including one-word data which is to be replaced partially by STD and other high-order bits specify one-word data within the BANK. The use of ADD in MU 100 will be explained more concretely below with reference to Figs. 1(a) and 1(b).

Fig. 1(b) is a timing chart for explaining partial-store access and partial-store merge access performed in MU 100. In Fig. 1(b), reference sign "τ" represents a time interval of a clock signal sent from MCU 200 (a signal line for the clock signal is not depicted in Fig. 1(a)). Compound numerals such as 00, 01, 02, -----11 and 12 represent stages of pipelines.

When ADD is sent to MU 100 from MCU 200, ADD is sent to a decoder (DEC) 31 in BANK CONTROL 103 and address registers (ADD-REG) 21 in MEMORY DEVICE 102. The first bank-select signal (BANK SEL∗1) for selecting a BANK is produced in DEC 31 by decoding the four low-order bits of ADD and is sent to ADD-REG 21 to select one of the BANKs 0 to 15; a BANK thus selected will be called a "selected BANK" hereinafter. Meanwhile, the high-order bits of ADD are sent to the selected BANK through ADD-REG 21 and used for selecting one-word data to be partially stored (or replaced) with STD.

When one of BANKs 0 to 15 is selected by BANK SEL∗1 and the high-order bits of ADD are sent to the selected BANK via ADD-REG 21, one-word data to be replaced with STD, which data to be replaced is called memory read data (MRD) hereinafter, is read out and stored in one of the read data registers (RD-REG) 22 connected to the selected BANK. A time period from the time at which the ADD high-order bits are sent to the selected BANK to the time at which MRD is stored in RD-REG 22 is indicated by TAA in Fig. 1(b). TAA is the time obtained by adding time required to read out data from a memory cell and time wasted in peripheral circuits, such as BANK ADD-REG 21 and RD-REG 22. The timing for setting MRD in RD-REG 22 is determined by TAA. For example, when read out of MRD from a BANK is started in stage 00 (see Fig. 1(b)) and TAA is 100 nanoseconds (ns) and τ is 10 ns, MRD can be set in RD-REG 22 at the end of stage 09 and output in stage 10 as shown in Fig. 1(b).

BANK CONTROL 103 consists of a bank-address pipeline (BANK-ADD PIPELINE) 30 composed of shift registers and decoders (DEC) 31, 34, 35 and 36 as shown in Fig. 1(a). DEC 31 has been explained above. The other DECs 34, 35 and 36 are provided to produce bank-select signals BANK SEL09, BANK SEL10 and BANK SEL11, by decoding register outputs of BANK-ADD PIPELINE 30 in stages 09, 10 and 11, respectively. BANK-ADD PIPELINE 30 shifts the bank address (four low-order bits of ADD) step by step through the registers number (00), (01), --- and (11). For example, BANK SEL09 represents a set of 16 bank-select signals into which DEC 34 decodes the outputs of register (09) in stage 09 shown in Fig. 1(a).

The MRD set in RD-REG 22 is sent to selector (SEL) 23, where one of the outputs of RD-REG 22 is selected by BANK SEL10 into which DEC 35 decodes the output of register (10), and the output of SEL 23, which will be called "RD" hereinafter, is sent to selector (SEL) 24. In SEL 24, STD sent from MCU 200 is combined with RD sent from SEL 23. (In partial-store access, and in partial-store merge access which will be explained later, STD is used as write data (WD) for the memory banks, so that there is a case that WD is used instead of STD hereinafter). As shown in Fig. 1(b), STD from MCU 200 is shifted by 10 clock time intervals (10τ ) by a write data pipeline (WD PIPELINE) 10b in STORE-DATA PIPELINE 101, which is for timing STD with RD. At the same time, BMK from MCU 200 is also shifted, to the same extent as STD in WD PIPELINE 10b, by a BMK pipeline (BMK PIPELINE) 10a, producing a shifted BMK which will be called BM hereinafter. The time relationships of WD and BM with RD are shown in stage 10 in Fig. 1(b).

In SEL 24, WD and RD are combined, as specified by BM. BM consists of four bits, corresponding to the four bytes of WD, the four bits being not all zeros or all ones. When a bit in BM is "1", a byte corresponding to the bit "1" is selected from WD, and when "0", a byte corresponding to the bit "0" is selected from RD, thus producing combined data (CD) consisting of four bytes.

The CD from SEL 24 is set in one of the write-data registers (WD-REG) 27 selected by a bank select signal (BANK SEL-11) from DEC 36, via the buffer register (BF)25 and with an error correction code added by the check code generator (CG)26. Partial-store access is performed by storing the contents of the selected writing register in the selected bank.

With the partial-store access mentioned above, when partial-store access is again required to be performed for the same memory address, it can occur that the succeeding partial-store access is required to be newly performed for the same memory address before the preceding partial-store access is terminated. In this case, however, the succeeding partial-store access has nonetheless to be performed after the preceding partial-store access is terminated. This causes an increase in the number of times partial store access is performed, decreasing the efficiency of the computing system.

An improvement in relation to this problem has been provided by the inventor of the present invention. The improvement was disclosed in Laid-open Japanese Patent TOKUKAISHO 62-38953 (1987) and TOKAISHO 63-129437 (1988). Therein, a new partial-access method called "partial-store merge access" is disclosed. According to the partial-store merge access method, the succeeding partial-store access can be performed as a part of a preceding partial-store access.

The present invention relates to the further improvement of the partial-store merge access method. Therefore, the partial-store merge access method will be discussed briefly below, in reference to Fig. 1(c).

Fig. 1(c) is a schematic block diagram for illustrating partial-store merge access. Only those constituents relating to partial-store merge access are shown in STORE-DATA PIPELINE 101 and BANK CONTROL 103 in MU 100. In Fig. 1(c), the same reference signs as in Fig. 1(a) designate the same or similar constituent units or blocks as in Fig. 1(a). In Fig. 1(c), signals and data such as GO, STD, ADD and BMK are sent to MU 100 from MCU 200, as in Fig. 1(a), and a GO pipeline (GO PIPELINE) 12a and circuits associated with GO PIPELINE 12a are provided in STORE-DATA PIPELINE 101.

In MCU 200 in Fig. 1(c), when a request for a succeeding partial-store access to be performed in MCU 200 is issued from, for example, a central processing unit (CPU) not depicted in Fig. 1(c), whilst MU 100 is performing a preceding partial-store access, MCU judges that the preceding partial-store access is in progress in MU 100 and sends GO to MU 100 with other signals such as STD, ADD and BMK, to be used for the succeeding partial-store access. GO for the succeeding partial-store access is used to inform MU 100 that succeeding partial-store access is required to be performed in MU 100 as partial-store merge access.

Partial-store merge access will be discussed in relation to Fig. 1(c), using, for convenience, WD PIPELINE 11a for only a one-byte STD and BMK PIPELINE 10a for one bit corresponding to the one-byte STD. However, one-word data read from a bank, and so STD, consists usually of 16 bytes. In this case, 15 sets of WD PIPELINEs and BMK PIPELINEs, each being the same as WD PIPELINE 11a and BMK PIPELINE 10a in Fig. 1(c), are to exist in parallel with WD PIPELINE 11a and BMK PIPELINE 10a respectively.

The STD from MCU 200 is shifted by WD PIPELINE (composed of registers) 11a and outputs WD00, WD01, ---, WD09 and WD10 from the registers for stages 00, 01, ---, 09 and 10 are sent to AND gates in AND circuit (AND) 17a respectively. In AND 17a, the outputs of AND gates are wired-ORed and sent to selector (SEL) 24 for selecting read data (RD) or write data (WD). The operation of SEL 24 will be further explained below.

BMK from MCU 200 is shifted by BMK PIPELINE (composed of registers, or in this case, flip-flops) 10a and byte mark signals (BM00, BM01, ----, BM09 and BM10) are output from the registers for stages 00, 01, ---, 09 and 10.

The GO from MCU 200 is shifted by GO PIPELINE (composed of flip-flops) 12a and the outputs of the flip-flops for stages 00, 01, ---, 08 and 09 are sent to compare (CP) gates in a CP circuit (CP) 13a respectively.

Four low-order bits of ADD from MCU 200 are shifted by BANK-ADD PIPELINE (composed of registers) 30 and bank address signals from registers for stages 00, 01, ---, 08 and 09 are input to CP gates in CP 13a, respectively, together with the output of the register for stage 10.

CP 13a checks the signals from GO PIPELINE 12a to see whether signal GO exists in GO PIPELINE 12a. CP 13a also checks the bank address at stage 10 and the bank address in each stage for coincidence to see whether there is any succeeding STD in WD PIPELINE 11a to be merged with preceding STD which has advanced to stage 10 where MRD is read out. The latter check is based on a priority principle that the last-in data has the highest priority. Therefore, merge access signals (ST-MG00, ST-MG01, ---, ST-MG08 and ST-MG09) output from respective CP gates of CP 13a are for indicating whether or not there is any succeeding partial-store merge access required when the preceding partial-store access is in stage 10.

In an AND circuit (AND) 14a, the outputs of CP 13a (ST-MG00, ST-MG01, ---, ST-MG08 and ST-MG09) are ANDed with the outputs of BMK PIPELINE 10a (BM00, BM01, ---, BM08 and BM09) by the AND gates of AND 14a respectively, and the outputs of the AND gates are sent to priority selector (P-SEL) 15a respectively.

The P-SEL 15a is for performing priority selection of outputs of AND 14a, in other words, priority selection of BMK, based on the priority principle. Therefore, in P-SEL 15a, only the last-in BMK is selected even though other preceding BMKs exist in BMK PIPELINE 10a.

Output signal BM10 from BMK PIPELINE 10a is directly sent to P-SEL 15a. When there is no succeeding STD to be partially stored, in other words when the partial-store merge access is not required and only the partial-store access is required to be performed, only BM10 is selected by P-SEL 15a, because in this case the signals input to P-SEL 15a from AND 14a are all "0" except BM10.

Output of P-SEL 15a is sent to OR gate (OR) 16a and AND 17a at the same time.

When the output of P-SEL 15a is all "0", which means no partial-store access is required, OR 16a outputs "0" for BM, as indicated by BM in Fig. 1(c), to selector (SEL) 24 and AND 17a outputs nothing (all "0") to SEL 24. Thus, when the output of OR 16a is "0", SEL 24 selects only RD to output.

When the outputs of P-SEL 15a are all "0" except the output due to BM10, which means only partial-store access is required, OR 16a outputs "1" to SEL 24 and AND 17a selects WD10 to send to SEL 24. Thus, when "1" is sent to SEL 24 from OR 16a and WD 10 is sent to SEL 24 from AND 17a, SEL 24 selects WD10 instead of RD for performing the partial-store access, which is the same as performing the partial-store access in Fig. 1(a).

When some outputs from AND 14a to P-SEL 15a are "1" with the output due to BM10 set to "1", the last-in "1" is selected with first priority by P-SEL 15a to output the selected "1" therefrom. As a result, OR 16a outputs a signal "1" due to the last-in "1" and sends the "1" to SEL 24, and AND 17a selects one of outputs, WD00, WD01, ---, WD08 and WD09, of WD PIPELINE 11a, corresponding to the last-in "1". In this case, SEL 24 selects the succeeding STD for performing partial-store merge access.

As indicated above, DRAM has a long access time, compared with SRAM; that is, the access time of DRAM is 2 to 3 times as long as that of SRAM. Therefore, if it is assumed that SRAM has been used in MU 100 in Figs. 1(a) and 1(c) and the SRAM must be replaced with DRAM as a result of considerations of economy, the hardware needed for WD PIPELINE 11a, GO PIPELINE 12a, BMK PIPELINE 10a and BANK-ADD PIPELINE 30 and the circuits associated with each pipeline would be 2 to 3 times more than that in the case of SRAM.

As the number of stages of a pipeline exceeds the 5 number of banks, circuits associated with partial-store access increase to a great extent.

Furthermore, when using a pipeline, master-slave flip-flops, which are composed of more gates and are more expensive as compared with other types of flip-flops such as D-type flip-flops, are required for each pipeline to avoid a racing phenomenon occurring. The master-slave flip-flop circuit is not depicted in Figs. 1(a) and 1(c) but it is well-known to those skilled in the art. Therefore, when the number of stages of each pipeline increases, the amount of hardware required for controlling partial-store access increases significantly.

An embodiment of the present invention can provide for improved efficiency of a partial-store control circuit used in a memory unit which has, for example, a memory device divided into a plurality of memory banks, and is controlled using an interleave method.

An embodiment of the present invention can provide for a decrease in the quantity of hardware needed for a partial-store control circuit.

An embodiment of the present invention can provide for reduced cost of a memory unit.

An embodiment of the present invention can provide for increased reliability of a partial-store control circuit.

The present invention is defined according to claim 1 (apparatus) and claim 10 (method).

In an embodiment of the present invention a store-data pipeline is excluded from the memory unit and one-word wide write-data registers and write-position registers are provided for the memory unit instead of the store-data pipeline, corresponding to the memory banks. Each write-data register is for storing one-word data, which includes data (partial-store data) to be partially stored into a memory bank and each write-position register is for specifying positions of the partial-store data in the one-word data. When performance of a partial-store access (an initial partial-store access) has started in the memory unit and performance of another, succeeding partial-store access in the memory unit is requested before the access time for the initial partial-store access elapses, incoming partial-store data, externally provided, is overwritten in the write-data registers at a position designated by an incoming, externally provided write position signal, thus successively renewing the partial-store data in the write-data registers, based on the principle that the last-in data has the highest priority. The contents of the write-position registers are successively ORed with the incoming write position signals and set in the write-position registers to accumulate the signals. When one-word data is read out from a memory bank for performing partial-store access (initial partial-store access), succeeding partial-store access can be performed together with the initial partial-store access, by replacing the data read from the memory bank with the contents of the write data registers in accordance with the write position signals from the write-position registers.

Reference is made, by way of example, to the accompanying drawings, in which:-
Fig. 1(a) is a schematic block diagram for illustrating function of a partially storing control circuit used in a memory unit;
Fig. 1(b) is a timing chart for showing the access time of a partial-store access and timing of signals provided in the partially storing control circuit of Fig. 1(a).
Fig. 1(c) is a schematic block diagram illustrating function of a store-data pipeline in a partially storing control circuit.
Fig. 2(a) is a block diagram illustrating a store-data register in a partially storing control circuit embodying the present invention;
Fig. 2(b) is a schematic circuit diagram of a selector used with a byte-mark register in the store-data register of Fig. 2(a).
Fig. 3 is a timing chart for explaining timing of signals produced in a partially storing control circuit embodying the present invention.

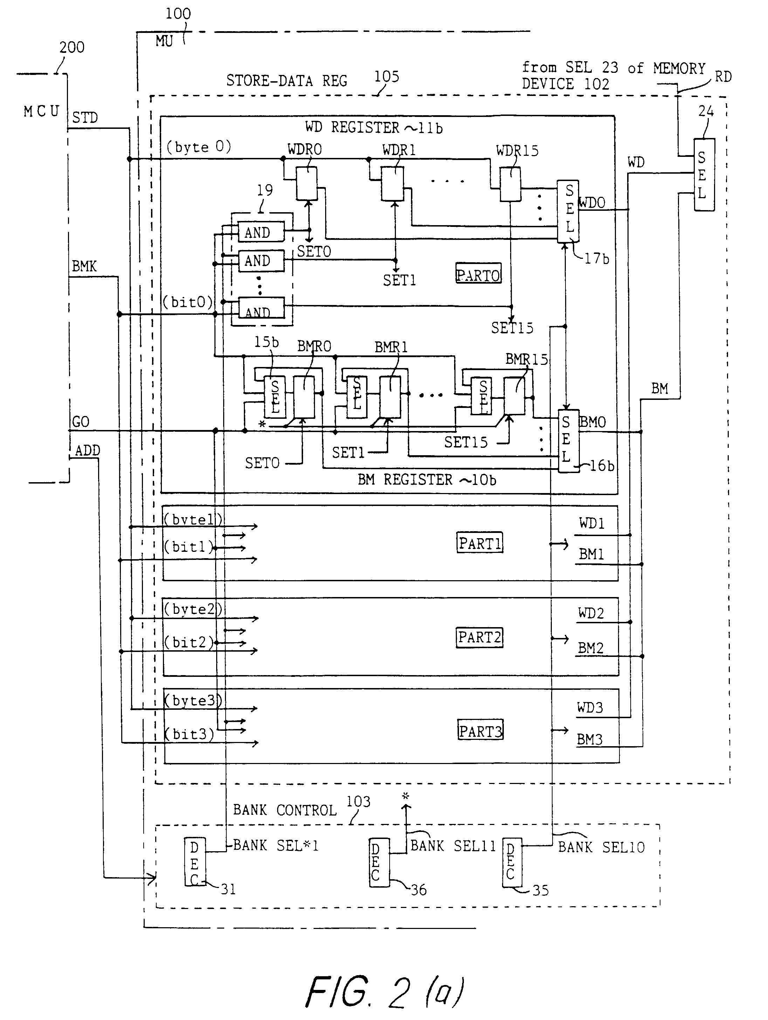

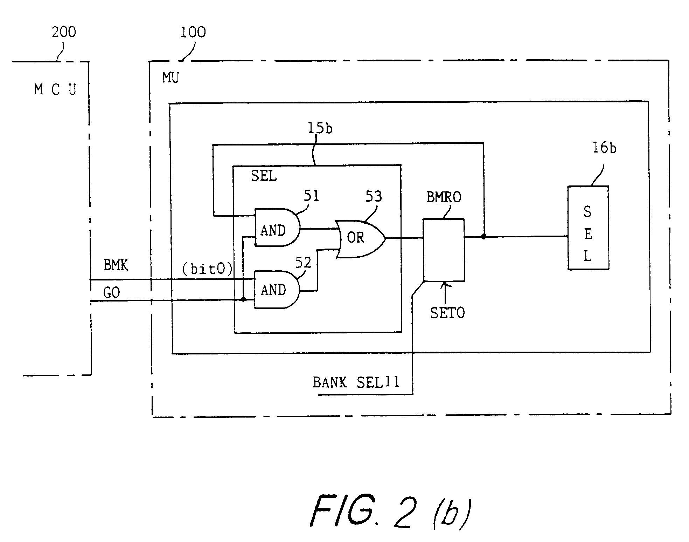

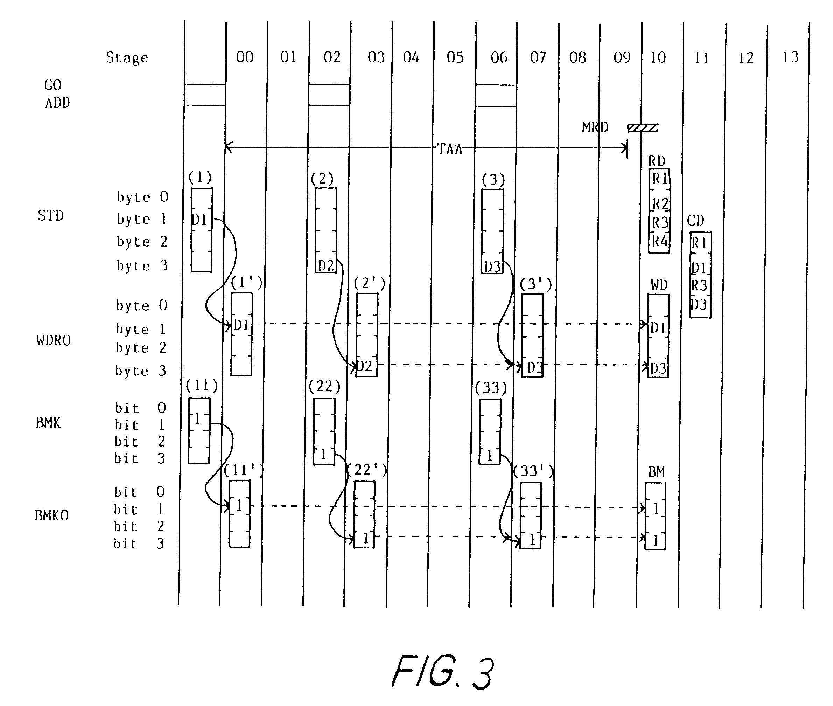

Figs. 2 serve to illustrate function of a store-data register in a partially storing control circuit embodying the present invention, and Fig. 3 is a timing chart for explaining the timing of signals produced in the partial storing control circuit illustrated by Figs. 2, based on an access time in partial-store access. In Figs. 2, the same reference signs as in Fig. 1(a) or 1(c) designate the same or similar units or parts as in Fig. 1(a) or 1(c). In Fig. 3, the same reference signs as in Fig. 1(b) designate the same or similar symbols or stages as in Fig. 1(b).

For the purposes of the description below, it will be assumed for convenience that STD from MCU 200 consists of four bytes and that, therefore, BMK from MCU 200 consists of four bits, that GO from MCU 200 is used not only for performing partial-store access but also for performing partial-store merge access and that the memory device is divided into sixteen memory banks, as in the case of Figs. 1(a), 1(b) and 1(c).

Fig. 2(a) shows a store-data register (STORE-DATA REG) 105 provided in MU 100, instead of STORE-DATA PIPELINE 101 explained with reference to Fig. 1(a) or 1(c). The STORE-DATA REGISTER 105 consists of four similar parts (PARTs 0, 1, 2 and 3), corresponding to the four bytes of STD (bytes 0, 1, 2 and 3), and to the four bits of BMK (bits 0, 1, 2 and 3). A circuit of PART 0 for the byte 0 of STD is representatively depicted in Fig. 2(a). In each PART, there are sixteen one-byte wide write-data registers (WD REGISTER), sixteen byte-mark registers (BM REGISTER) and an AND circuit (AND) consisting of sixteen AND gates. The numbers of these registers and AND gates correspond to the sixteen BANKs 0, 1, 2, ---, 14 and 15 respectively. For example, in case of PART 0, there are WD REGISTER 11b consisting of sixteen write-data registers, WDR0, WDR1, WDR2, ---, WDR14 and WDR15, BM REGISTER 10b consisting of sixteen byte-mark flip-flops, BMR0, BMR1, ---, BMR14 and BMR15 and AND 19, as shown in Fig. 2(a).

BANK SEL∗1 from DEC 31 in BANK CONTROL 103 and BMK from MCU 200 are sent to the AND gates in PARTs 0 to 3, where sixteen decoded signals of BANK-SEL∗1 and BMK are ANDed, respectively and GO from MCU 200 is sent in parallel to byte-mark registers in PARTs 0 to 3. For example, in case of PART 0, BANK-SEL∗1 and BMK are sent to AND 19 and GO is sent to BM REGISTER 10b. In AND 19, BANK-SEL∗1 and BMK are ANDed, so that (either) one of AND gates produces a "1". If byte-data to be partially stored exists in the byte 0 of STD, one of the registers (WDRs 0 to 15) is selected by the output "1" from AND 19, so that the byte-data is set in the selected WDR.

When the partial-store access has advanced to stage 10 (see Fig. 1(b)), selector (SEL) 17b selects one of the outputs of WD REGISTER 11b according to BANK SEL10 applied to SEL 17b from DEC 35 in BANK CONTROL 103 (see Fig. 1(a)) to output byte-data. The byte-data output from SEL 17b will be called a "write-data 0" hereinafter and indicated as "WD 0" in Fig. 2(a). In the same way as the above, WD 1, 2 and 3 are output from PART 1, 2 and 3 to SEL 24, respectively.

Meanwhile, when byte-data to be partially stored exists in byte 0 of STD, one of SETs 0 to 15 becomes "1" and selects one of BMRs 0 to 15 of BM REGISTER 10b to set BMK bit 0 in the selected BMR corresponding to the selected WDR. Each BMR is a D-type flip-flop provided with a selector (SEL) which is representatively numbered as "SEL 15b" in Fig. 2(a). Combining thus the D-type flip-flop BMR with the selector is for performing partial-store merge access, and Fig. 2(b) shows the combined circuit for BMR 0. In Fig. 2(b), the same reference signs as in Fig. 2(a) designate the same parts as in Fig. 2(a).

A partial-store merge access performed using the circuit shown in Fig. 2(b) will be explained with reference to the timing chart of Fig. 3. In Fig. 3, the same reference signs as in Fig. 1(b) designate the same or similar features as in Fig. 1(b).

In Fig. 2(b), SEL 15b consists of two AND gates (ANDs 51 and 52) and an OR gate (OR 53) connected to BMR 0. When byte-data to be partially stored in MU 100 exists in byte 0 of STD, bit 0 of BMK from MCU 200, which will be written "BMK(bit 0)", hereinafter, is "1", so that SET 0 from AND 19 becomes "1". Signals BMK (bit 0) and GO are sent to AND 52 of SEL 15b and SET 0 is sent to BMR 0. When BMK (bit 0) is "1" and GO from MCU 200 is also "1", the output of AND 52 becomes "1" and is sent to OR 53 from which "1" is output. When the output of OR 53 is "1" and BMR 0 is triggered by SET 0, BMR 0 is set to "1". There is another AND gate 51 (AND 51) having two inputs connected to the output of BMR0 and GO and having an output connected to another input of OR 53. When the output of BMR 0 is "1" and GO is activated, AND 51 outputs "1", then OR 53 outputs "1", thus retaining the "1" state of BMR 0. Therefore, once BMR 0 is set to "1" due to BMK (bit 0) of preceding partial-store access, BMR 0 always outputs "1", even if BMK (bit (0) of succeeding partial-store access is "0" and AND 52 does not output "1". BMR 0 retains the set "1" state until cleared by BANK SEL11 of BANK-ADD PIPELINE 30.

Therefore, in MU 100, when a plurality of commands for partial-store access to the same address in BANK 0, for example, are required to be performed successively, within the access time for an initial partial-store access, in other words when partial-store merge access is required to be performed, the partial-store merge access can be performed as follows, referring to a timing chart in Fig. 3:-

GO and ADD designating BANK 0 and STD (1) including byte-data D1 in byte 1 are initially sent to MU 100 from MCU 200 to partially store D1 in BANK 0 as shown on the left-upper side of Fig. 3, and at the same time, BMK (11) including "1" in bit 1 is sent to MU 100 from MCU 200 as shown on left-lower side of Fig. 3.

BANK CONTROL 103 (see Figs. 2(a) and 1(a)) starts advancing stages from 00, that is, starts advancing the bank address (in this case, bank address 0) through BANK-ADD PIPELINE 30 as shown on upper side of Fig. 3, and at the same time, GO, STD (1) and BMK (11) are sent to PART 1 of STORE-DATA REG 105 (see Fig. 2(a)), where, in stage 00, STD (1) including D1 is set in WDR 0 (1') of PART 1, not depicted in Fig. 2(a), when activated by SET 0 output from AND 19, not depicted in Fig. 2(a). BMK (11) is set in BMR 0 (11') of PART 1, not depicted in Fig. 2(a), as shown on left-lower side of Fig. 3.

When the initial partial-store access is in stage 02, and when another GO and ADD designating the same BANK 0, STD (2) including another byte-data D2 in byte 3 and BMK (22) including "1" in bit 3 are sent to MU 100, STD (2) is set in WDR 0 (2') of PART 3, not depicted in Fig. 2(a), and BMK(22) is set in BMR 0 (22') of PART 3, not depicted in Fig. 2(a).

When the initial partial-store access is in stage 06, and still another GO and ADD designating the same BANK 0, STD (3) including still another byte-data D3 in byte 3 and BMK (33) including "1" in bit 3 are sent to MU 100, STD (3) is set in WDR 0 (3') of PART 3, as a result, D2 in byte 3 of WDR 0 which was stored due to STD (2) is replaced with D3. BMK (33) is set in BMR 0 (33') of PART 3, thus retaining the "1" in bit 3 of BMR 0 which was stored due to BMK (22).

When the initial partial-store access advances to stage 10, BANK SEL 10 applied to SEL 17b and SEL 16b of PARTs 1 and 3, not depicted in Fig. 2(a), gates out WD including D1 and D3 in bytes 1 and 3 respectively and also BM including "1" in bits 1 and 3 respectively to SEL 24 (see Fig. 2(a)), where byte-data R1 and R3 in bytes 1 and 3 respectively of RD are replaced with D1 and D3 respectively, producing combined data CD consisting of R1, D1, R3 and D3, as shown in Fig. 3.

In accordance with an embodiment of the present invention partial-store access to each of a plurality of memory banks in a memory unit operating on the basis of an interleave method is carried out by: reading out one word of read-data from the memory banks in an access time; registering one word of write-data including partially storing data in store-data registers having the same number as the memory banks, in a state of overwriting, initially and at least one time successively within the access time; registering a positional signal for the partially storing data in position-signal registers having the same number as the memory banks, corresponding to registering of the storing data; combining the read out one word read-data with the registered partially storing data, replacing preceding data in the one word read-data with the partially storing data registered, using the registered positional signals, producing a rewrite-data, after the access time; and restoring the rewrite-data to the memory banks.

The present invention provides a partially storing control circuit used in a memory unit including a memory device, for performing partial-store access to the memory device, said partially storing control circuit comprising:-
read out means for reading out read data from the memory device, taking an access time, said read out means starting to operate in accordance with an initial access command sent from the exterior of the memory unit;
register means for registering initial write-data including initial partially storing data in accordance with the initial access command and for registering succeeding write-data including succeeding partially storing data with overwrite operation before said access time is over in accordance with succeeding access command, said initial write-data, said succeeding write-data and said succeeding access command being sent from the exterior of the memory unit respectively;
combining means for combining said read-data with said initial and succeeding partially storing data registered and left in said register means through said access time, replacing preceded data in said read-data with said initial and succeeding partially storing data left in said register means through said access time, after said access time is over, producing rewrite-data; and
restoring said rewrite-data in the memory device.

The present invention provides a partially storing control circuit used in a memory unit including a plurality of memory banks, for performing partial-store access to the memory banks every bank through an interleave method; said partially storing control circuit comprising:-
read out means for reading out one word read-data from the memory banks, taking an access time, said read out means starting to operate in accordance with an initial access command sent from the exterior of the memory unit;
register means for registering initial one word write-data including initial partially storing data in accordance with the initial access command and for registering succeeding one word write-data including succeeding partially storing data with overwrite operation before said access time is over in accordance with succeeding access command, said initial one word write-data, said succeeding one word write-data and said succeeding access command being sent from the exterior of the memory unit respectively;
combining means for combining said one word read-data with said initial and succeeding partially storing data registered and left in said register means through said access time, replacing preceding data in said one word read-data with said initial and succeeding partially storing data left in said register means through said access time, after said access time is over, producing rewrite-data; and
restoring said rewrite-data in the memory banks.

The present invention provides a partially storing control circuit used in a memory unit including a plurality of memory banks, for performing partial-store access to the memory banks every bank through an interleave method; said partially storing control circuit comprising:-
read out means for reading out one word read-data from the memory banks, taking an access time, said read out means starting to operate in accordance with an initial access command sent from the exterior of the memory unit;
first register means for registering, corresponding to the memory banks, one word write-data including initial partially storing data in accordance with the initial access command and for registering succeeding one word write-data including succeeding partially storing data with overwrite operation before said access time is over in accordance succeeding access command, said initial one word write-data, said succeeding one word write-data and said succeeding access command being sent from the exterior of the memory unit respectively;
second register means for registering, corresponding to the memory banks, positioning data for designating positions of said initial and succeeding partially storing data to be registered in said first register means respectively, in accordance with said initial access command and said succeeding access commands respectively, said positioning data being sent from the exterior of the memory unit, corresponding to said initial and succeeding one word write-data respectively;
combining means for combining said one word read-data with said initial and succeeding partially storing data registered and left in said first register means through said access time, replacing preceded data in said one word read-data with said initial and succeeding partially storing data respectively, using said positioning data, after said access time is over, producing one word rewrite-data; and
restoring said one word rewrite data in the memory banks.

Said first register means may comprise first registers provided as much as the number of the memory banks and an AND gate circuit to produce set signals for setting said initial and succeeding one word write-data respectively, corresponding to the memory banks.

Said second register means may comprise second registers and AND-OR circuits provided as much as the number of the memory banks respectively, each of said second registers being made out of a D-type flip-flop circuit for setting one of said positioning data when one of said set signals is applied thereto until said D-type flip-flop circuit is reset after said access time is over, and each of said AND-or circuits being for making said D-type flip-flop circuit register said positioning data until said access time is over.

## Claims

1. A partial-store control circuit for a memory unit (100) including a memory device (102), for performing partial-store access to the memory device (102), the control circuit comprising:-
read out means (BANK CONTROL 103, RD-REG 22, SEL 23) operable to read out read-data (RD) from the memory device (102), the read out process extending over an access time period of the memory device, said read out means commencing operation in accordance with an externally generated initial access command (60) sent to the memory unit (100);
characterised by:-
register means (STORE-DATA REG 105, WD-REGISTER 11b; BM-REGISTER 10b) operable to register initial write-data (WD) including initial partial-store data (STD) in accordance with the initial access command (GO), and operable to register succeeding write-data including succeeding partial-store data with an overwrite operation, before said access time period has expired, in accordance with a succeeding access command (GO), said initial write-data, said succeeding write-data and said succeeding access command being each generated externally of the memory unit (100);
combining means (SEL 24) operable to combine said read-data with said initial and succeeding partial-store data registered and left in said register means over said access time period, replacing preceding data in said read-data with said initial and succeeding partial-store data left in said register means over said access time period, after said access time period has expired, producing rewrite-data; and
means for restoring said rewrite-data into the memory device (102).

2. A partial-store control circuit as claimed in claim 1, wherein the memory unit (100) includes a plurality of memory banks (BANK 0 to BANK 15), and partial-store access can be performed in respect of each of the memory banks, through an interleave method, and wherein each of said read data, said initial write data, said succeeding write data and said rewrite-data is one word data.

3. A partial-store control circuit as claimed in claim 2, wherein said register means (STORE-DATA REG 105) comprises:-
first register means (WD-REGISTER 11b) operable to register, in correspondence to respective memory banks (BANK 0 to BANK 15), one word write-data including said initial partial-store data in accordance with said initial access command, and operable to register said succeeding one word write-data including said succeeding partial-store data with overwrite operation, before said access time period has expired, in accordance with a succeeding access command; and
second register means (BM REGISTER 10b), operable to register, in correspondence to respective memory banks (BANK 0 to BANK 15), positioning data for designating positions of said initial and succeeding partial-store data to be registered in said first register means respectively, in accordance with said initial access command and said succeeding access commands respectively, said positioning data being generated externally of the memory unit (100), corresponding to said initial and succeeding one word write-data respectively;
and wherein the combining, effected by said combining means (SEL 24) is carried out using said positioning data.

4. A partial-store control circuit as claimed in claim 3, wherein said first register means (WD-REGISTER 11b) comprises first registers (WDR 0 to WDR 15), of a number equal to the number of memory banks (BANK 0 to BANK 15), and an AND gate circuit (19) operable to produce set signals (SET 0 to SET 15) for setting said initial and succeeding one word write-data respectively, corresponding to the memory banks.

5. A partial-store control circuit as claimed in claim 4, wherein said second register means (BM REGISTER 10b) comprises second registers (BMR 0 to BMR 15) and AND-OR circuits, of numbers equal to the number of memory banks (BANK 0 to BANK 15), each of said second registers comprising a D-type flip-flop circuit for setting therein one item of positioning data when one of said set signals (SET 0 to SET 15) is applied thereto until the D-type flip-flop circuit is reset after said access time period has expired, and each of said AND-OR circuits being operable to make said D-type flip-flop circuits register items of positioning data until said access time period has expired.

6. An apparatus for controlling partial storage of data from a memory control unit (MCU 200), said apparatus including a circuit as claimed in claim 1 and comprising:
a bank control circuit (103) to generate a plurality of bank control signals (BANK SEL*1 to BANK SEL 11);
a plurality of parts (STORE DATA REG 105; PART 0, PART 1, PART 2, PART 4) operatively coupled to the bank control circuit (103), each said part including
an AND circuit (19) operatively coupled to said bank control circuit (103) and a word mark signal (BMK) from the memory control unit (MCU 200) to generate set signals (SET 0 to SET 15);
a plurality of write data registers (WDR 0 to WDR 15) operatively coupled to a word signal (STD) from the memory control unit (MCU 200) and said AND circuit (19) to store the word signal in one of said write data registers (WDR 0 to WDR 15) selected by the set signal (SET 0 to SET 15);
a plurality of word mark registers (BMR 0 to BMR 15) operatively coupled to the word mark signal (BMK) from the memory control unit (MCU 200) and said AND circuit (19) to store the word mark signal (BMK) in one of said word mark registers (BMR 0 to BMR 15) selected by the set signal (SET 0 to SET 15);
a write data selector (SEL 17b) operatively coupled to said plurality of write data registers (WDR 0 to WDR 15) and said bank control circuit (103) to select a write data register (WDR 0 to WDR 15) for output based on the bank control signals (BANK SEL 10); and
a word mark selector (SEL 16b) operatively coupled to said plurality of word mark registers (BMR 0 to BMR 15) and said bank control circuit (103) to select a word mark register (BMR 0 to BMR 15) for output based on the bank control signals (BANK SEL 10).

7. An apparatus according to claim 6, wherein said bank control circuit (103) includes a plurality of delay circuits (BANK-ADD PIPELINE 30) to generate at least a first bank control signal (BANK SEL*1) first in time and a second bank control signal (BANK SEL 10) second in time.

8. An apparatus according to claim 7, wherein said AND circuit (19) is responsive to the first bank control signal (BANK SEL*1) from said bank control circuit (103) and said write data and word mark data selectors (SEL 17b; SEL 16b) are responsive to the second bank control signal (BANK SEL 10) from said bank control circuit (103).

9. An apparatus according to claim 6, further comprising a plurality of selectors (SEL 15b), each selector operatively coupled to a corresponding word mark register (BMR 0 to BMR 15), the word mark signal (BMK) from the memory control unit (MCU 200) and a control signal (GO) from the memory control unit (MCU 200), to determine data to be stored in the corresponding word mark register (BMR 0 to BMR 15) based on the control signal (GO) and data presently stored in the corresponding word mark register (BMR 0 to BMR 15).

10. A method of controlling partial storage of data, said method comprising the steps of:
(a) generating a plurality of bank control signals (BANK SEL*1 to BANK SEL 11);
(b) receiving a number of n words (STD) from a memory control unit (MCU 200);
(c) receiving a number of n word mark signals (BMK) from the memory control unit (MCU 200);
(d) generating a number of n·2ⁿ set signals (SET 0 to SET 15) for n parts (STORE-DATA REG 05; PART 0, PART 1, PART 2, PART 3) based on the bank control signals (BANK SEL*1 to BANK SEL 11) and the word mark signals (BMK);
(e) storing respective first through nth words (STD) received in step (b) in respective first through nth parts (PART 0, PART 1, PART 2, PART 3) based on the set signals (SET 0 to SET 15);
(f) storing respective first through nth word mark signals (BMK) received in step (c) in respective first through nth parts (PART 0, PART 1, PART 2, PART 3) based on the set signals (SET 0 to SET 15);
(g) selecting in each part (STORE-DATA REG 105; PART 0, PART 1, PART 2, PART 3) one of the first through nth words (STD) and one of the first through nth word mark signals (BMK) ; and
(h) selecting at least one of the words (STD) and the word mark signals (BMK) selected in step (g); and
(i) repeating steps (a) through (h) for another number of n words (STD).

11. A method according to claim 10,
wherein said method further comprises the step of (j) receiving an address signal (ADD) from the memory control unit (MCU 200); and
wherein said plurality of bank control signals (BANK SEL*1 to BANK SEL 11) generated in step (a) are generated based on the address signal (ADD) received in step (j).

12. A method according to claim 11, wherein each of the plurality of bank control signals (BANK SEL*1 to BANK SEL 11) generated in step (a) is generated by delaying the control signal by a predetermined number of stages (BANK ADD PIPELINE 30) and generating particular bank control signals (BANK SEL*1 to BANK SEL 11) at particular stages.

13. A method according to claim 10, wherein said generating of the set signals (SET 0 to SET 15) in step (d) includes the step of (d1) d logically ANDing (19) a first bank control signal (BANK SEL*1) and the respective word mark signal (BMK) for each respective part.

14. A method according to claim 13, wherein said selecting in step (h) selects based on a second bank control signal (BANK SEL 10).

15. A method according to claim 14, wherein the word mark signal (BMK) stored by said storing in step (f) stores a word mark signal in a register (BMR 0 to BMR 15) until cleared by a third bank control signal (BANK SEL 11).

16. A method according to claim 15, wherein said generating in step (a) generates the first bank control signal (BANK SEL*1) first in time, generates the second bank control signal (BANK SEL 10) second in time, and generates the third bank control signal (BANK SEL 11) third in time.

17. A method according to claim 10, wherein said storing in step (e) stores each word in one of 2ⁿ registers (WDR 0 to WDR 15) designated by one of 2ⁿ set signals (SET 0 to SET 15) for each part (PARTO, PART1, PART2, PART3).

18. A method according to claim 10 or 17, wherein said storing in step (f) stores each word mark signal (BMK) in one of 2ⁿ registers (BMR 0 TO BMR 15) designated by one of 2ⁿ set signals (SET 0 TO SET 15) for each part (PART 0, PART 1, PART 2, PART 3).

19. A method according to claims 17 and 18, wherein when said storing in step (f) stores a word mark signal (BMK) in a register (BMR 0 to BMR 15), the word mark signal (BMK) remains stored until cleared by a particular bank control signal (BANK SEL 11).

20. A method according to claim 19,
wherein said method further comprises the step of (j) receiving a command signal (GO) from the memory control unit (MCU 200); and
wherein said storing in step (f) stores a word mark signal (BMK) in a register (BMR 0 to BMR 15) when the command signal (GO) received in step (j) commands a go condition and the register is empty.

21. A method according to claim 20, wherein said storing in step (f) retains the word mark signal (BMK) stored in the register (BMR 0 to BMR 15) when the command signal (GO) received in step (j) commands a go condition and the register is full.

22. A method according to claim 21, wherein said storing in step (f) clears the register (BMR 0 to BMR 15) when the command signal (GO) commands a no go condition.

23. A method according to claim 10, wherein said selecting in step (h) selects based on a particular bank control signal (BANK SEL 10).

24. A partial-store control circuit according to claim 3, 4 or 5, wherein overwriting on said first register means (WD-REGISTER 11b) and a logical OR on said second register means (BM-REGISTER 10b) are performed when the following access command is directed to the same data as directed by the initial command.

## Patentansprüche

1. Teilspeichersteuerschaltung für eine Speichereinheit (100), die eine Speichervorrichtung (102) enthält, zum Ausführen eines Teilspeicherzugriffs auf die Speichervorrichtung (102), welche Steuerschaltung umfaßt:-
ein Auslesemittel (BANKSTEUERUNG 103, RD-REG 22, SEL 23), das betriebsfähig ist, um Lesedaten (RD) aus der Speichervorrichtung (102) auszulesen, welcher Ausleseprozeß sich über einen Zugriffszeitraum der Speichervorrichtung erstreckt, welches Auslesemittel die Operation gemäß einem extern erzeugten anfänglichen Zugriffsbefehl (GO) beginnt, der zu der Speichereinheit (100) gesendet wird;
gekennzeichnet durch:-
ein Registermittel (SPEICHERDATENREGISTER 105, WD REGISTER llb; BM REGISTER 10b), das betriebsfähig ist, um anfängliche Schreibdaten (WD), die anfängliche Teilspeicherdaten (STD) enthalten, gemäß dem anfänglichen Zugriffsbefehl (GO) zu registrieren, und betriebsfähig ist, um nachfolgende Schreibdaten, die nachfolgende Teilspeicherdaten enthalten, bei einer Überschreiboperation gemäß einem nachfolgenden Zugriffsbefehl (GO) zu registrieren, bevor der Zugriffszeitraum abgelaufen ist, wobei die anfänglichen Schreibdaten, die nachfolgenden Schreibdaten und der nachfolgende Zugriffsbefehl jeweils außerhalb der Speichereinheit (100) erzeugt werden;
ein Kombinierungsmittel (SEL 24), das betriebsfähig ist, um die Lesedaten mit den anfänglichen und nachfolgenden Teilspeicherdaten, die registriert sind und während des Zugriffszeitraumes in dem Registermittel verblieben sind, zu kombinieren, wobei vorhergehende Daten in den Lesedaten durch die anfänglichen und nachfolgenden Teilspeicherdaten ersetzt werden, die während des Zugriffszeitraumes in dem Registermittel verblieben sind, nachdem der Zugriffszeitraum abgelaufen ist, wodurch Umschreibdaten erzeugt werden; und
ein Mittel zum Wiederherstellen der Umschreibdaten in der Speichervorrichtung (102).

2. Teilspeichersteuerschaltung nach Anspruch 1, bei der die Speichereinheit (100) eine Vielzahl von Speicherbänken (BANK 0 bis BANK 15) enthält und ein Teilspeicherzugriff hinsichtlich jeder der Speicherbänke durch ein Verschachtelungsverfahren ausgeführt werden kann und bei der jegliche der Lesedaten, der anfänglichen Schreibdaten, der nachfolgenden Schreibdaten und der Umschreibdaten Ein-Wort-Daten sind.

3. Teilspeichersteuerschaltung nach Anspruch 2, bei der das Registermittel (SPEICHERDATENREGISTER 105) umfaßt:-
ein erstes Registermittel (WD REGISTER 11b), das betriebsfähig ist, um in Entsprechung zu jeweiligen Speicherbänken (BANK 0 bis BANK 15) Ein-Wort-Schreibdaten, die die anfänglichen Teilspeicherdaten enthalten, gemäß dem anfänglichen Zugriffsbefehl zu registrieren, und betriebsfähig ist, um die nachfolgenden Ein-Wort-Schreibdaten, die die nachfolgenden Teilspeicherdaten enthalten, bei einer Überschreiboperation gemäß einem nachfolgenden Zugriffsbefehl zu registrieren, bevor der Zugriffszeitraum abgelaufen ist; und
ein zweites Registermittel (BM REGISTER 10b), das betriebsfähig ist, um in Entsprechung zu jeweiligen Speicherbänken (BANK 0 bis BANK 15) Positionierungsdaten zum Bezeichnen von Positionen der anfänglichen und nachfolgenden Teilspeicherdaten, die in dem ersten Registermittel jeweilig zu registrieren sind, gemäß dem anfänglichen Zugriffsbefehl und den nachfolgenden Zugriffsbefehlen zu registrieren, welche Positionierungsdaten außerhalb der Speichereinheit (100) erzeugt werden und den anfänglichen bzw. nachfolgenden Ein-Wort-Schreibdaten entsprechen;
und bei der das Kombinieren, das durch das Kombinierungsmittel (SEL 24) ausgeführt wird, unter Verwendung der Positionierungsdaten erfolgt.

4. Teilspeichersteuerschaltung nach Anspruch 3, bei der das erste Registermittel (WD REGISTER llb) erste Register (WDR 0 bis WDR 15) in einer Anzahl umfaßt, die der Anzahl von Speicherbänken (BANK 0 bis BANK 15) gleich ist, und eine UND-Gatterschaltung (19), die betriebsfähig ist, um Setzsignale (SET 0 bis SET 15) zum Setzen der anfänglichen bzw. nachfolgenden Ein-Wort-Schreibdaten zu erzeugen, die den Speicherbänken entsprechen.

5. Teilspeichersteuerschaltung nach Anspruch 4, bei der das zweite Registermittel (BM REGISTER 10b) zweite Register (BMR 0 bis BMR 15) und UND-ODER-Schaltungen in Anzahlen umfaßt, die der Anzahl von Speicherbänken (BANK 0 bis BANK 15) gleich sind, von welchen zweiten Registern jedes eine D-Typ-Flipflop-Schaltung umfaßt, zum Setzen eines Elementes von Positionierungsdaten in ihr, wenn eines der Setzsignale (SET 0 bis SET 15) auf sie angewendet wird, bis die D-Typ-Flipflop-Schaltung zurückgesetzt wird, nachdem der Zugriffszeitraum abgelaufen ist, und von welchen UND-ODER-Schaltungen jede betriebsfähig ist, um zu bewirken, daß die D-Typ-Flipflop-Schaltungen Elemente von Positionierungsdaten registrieren, bis der Zugriffszeitraum abgelaufen ist.

6. Vorrichtung zum Steuern des Teilspeicherns von Daten von einer Speichersteuereinheit (MCU 200), welche Vorrichtung eine Schaltung nach Anspruch 1 enthält und umfaßt:
eine Banksteuerschaltung (103), um eine Vielzahl von Banksteuersignalen (BANK SEL*1 bis BANK SEL 11) zu erzeugen;
eine Vielzahl von Teilen (SPEICHERDATENREGISTER 105; TEIL 0, TEIL 1, TEIL 2, TEIL 3), die mit der Banksteuerschaltung (103) operativ gekoppelt sind, wobei jeder Teil enthält:
eine UND-Schaltung (19), die mit der Banksteuerschaltung (103) und einem Wortmarkensignal (BMK) von der Speichersteuereinheit (MCU 200) operativ gekoppelt ist, um Setzsignale (SET 0 bis SET 15) zu erzeugen;
eine Vielzahl von Schreibdatenregistern (WDR 0 bis WDR 15), die mit einem Wortsignal (STD) von der Speichersteuereinheit (MCU 200) und der UND-Schaltung (19) operativ gekoppelt sind, um das Wortsignal in einem der Schreibdatenregister (WDR 0 bis WDR 15) zu speichern, das durch das Setzsignal (SET 0 bis SET 15) selektiert wurde;
eine Vielzahl von Wortmarkenregistern (BMR 0 bis BMR 15), die mit dem Wortmarkensignal (BMK) von der Speichersteuereinheit (MCU 200) und der UND-Schaltung (19) operativ gekoppelt sind, um das Wortmarkensignal (BMK) in einem der Wortmarkenregister (BMR 0 bis BMR 15) zu speichern, das durch das Setzsignal (SET 0 bis SET 15) selektiert wurde;
einen Schreibdatenselektor (SEL 17b), der mit der Vielzahl von Schreibdatenregistern (WDR 0 bis WDR 15) und der Banksteuerschaltung (103) operativ gekoppelt ist, um ein Schreibdatenregister (WDR 0 bis WDR 15) zur Ausgabe auf der Basis der Banksteuersignale (BANK SEL 10) zu selektieren; und
einen Wortmarkenselektor (SEL 16b), der mit der Vielzahl von Wortmarkenregistern (BMR 0 bis BMR 15) und der Banksteuerschaltung (103) operativ gekoppelt ist, um ein Wortmarkenregister (BMR 0 bis BMR 15) zur Ausgabe auf der Basis der Banksteuersignale (BANK SEL 10) zu selektieren.

7. Vorrichtung nach Anspruch 6, bei der die Banksteuerschaltung (103) eine Vielzahl von Verzögerungsschaltungen (BANK-ADD PIPELINE 30) enthält, um wenigstens ein erstes Banksteuersignal (BANK SEL*1) als erstes in der Zeit und ein zweites Banksteuersignal (BANK SEL 10) als zweites in der Zeit zu erzeugen.

8. Vorrichtung nach Anspruch 7, bei der die UND-Schaltung (19) auf das erste Banksteuersignal (BANK SEL*1) von der Banksteuerschaltung (103) reagiert und die Schreibdaten- und Wortmarkenselektoren (SEL 17b; SEL 16b) auf das zweite Banksteuersignal (BANK SEL 10) von der Banksteuerschaltung (103) reagieren.

9. Vorrichtung nach Anspruch 6, ferner mit einer Vielzahl von Selektoren (SEL 15b), wobei jeder Selektor mit einem entsprechenden Wortmarkenregister (BMR 0 bis BMR 15), dem Wortmarkensignal (BMK) von der Speichersteuereinheit (MCU 200) und einem Steuersignal (GO) von der Speichersteuereinheit (MCU 200) operativ gekoppelt ist, um Daten zu bestimmen, die in dem entsprechenden Wortmarkenregister (BMR 0 bis BMR 15) auf der Basis des Steuersignals (GO) und von Daten, die zur Zeit in dem entsprechenden Wortmarkenregister (BMR 0 bis BMR 15) gespeichert sind, zu speichern sind.

10. Verfahren zum Steuern des Teilspeicherns von Daten, welches Verfahren die folgenden Schritte umfaßt:
(a) Erzeugen einer Vielzahl von Banksteuersignalen (BANK SEL*1 bis BANK SEL 11);
(b) Empfangen einer Anzahl von n Wörtern (STD) von einer Speichersteuereinheit (MCU 200);
(c) Empfangen einer Anzahl von n Wortmarkensignalen (BMK) von der Speichersteuereinheit (MCU 200);
(d) Erzeugen einer Anzahl von n 2ⁿ Setzsignalen (SET 0 bis SET 15) für n Teile (SPEICHERDATENREGISTER 105; TEIL 0, TEIL 1, TEIL 2, TEIL 3) auf der Basis der Banksteuersignale (BANK SEL*1 bis BANK SEL 11) und der Wortmarkensignale (BMK);
(e) Speichern der jeweiligen ersten bis n-ten Wörter (STD), die bei Schritt (b) empfangen wurden, in den jeweiligen ersten bis n-ten Teilen (TEIL 0, TEIL 1, TEIL 2, TEIL 3) auf der Basis der Setzsignale (SET 0 bis SET 15);
(f) Speichern von jeweiligen ersten bis n-ten Wortmarkensignalen (BMK), die bei Schritt (c) empfangen wurden, in den jeweiligen ersten bis n-ten Teilen (TEIL 0, TEIL 1, TEIL 2, TEIL 3) auf der Basis der Setzsignale (SET 0 bis SET 15);
(g) Selektieren in jedem Teil (SPEICHERDATENREGISTER 105; TEIL 0, TEIL 1, TEIL 2, TEIL 3) eines der ersten bis n-ten Wörter (STD) und eines der ersten bis n-ten Wortmarkensignale (BMK); und
(h) Selektieren wenigstens eines der Wörter (STD) und der Wortmarkensignale (BMK), die bei Schritt (g) selektiert wurden; und
(i) Wiederholen der Schritte (a) bis (h) für eine andere Anzahl von n Wörtern (STD).

11. Verfahren nach Anspruch 10, bei dem das Verfahren ferner den Schritt (j) zum Empfangen eines Adressensignals (ADD) von der Speichersteuereinheit (MCU 200) umfaßt; und
bei dem die Vielzahl von Banksteuersignalen (BANK SEL*1 bis BANK SEL 11), die bei Schritt (a) erzeugt werden, auf der Basis des Adressensignals (ADD) erzeugt wird, das bei Schritt (j) empfangen wird.

12. Verfahren nach Anspruch 11, bei dem jedes von der Vielzahl von Banksteuersignalen (BANK SEL*1 bis BANK SEL 11), die bei Schritt (a) erzeugt werden, durch Verzögern des Steuersignals um eine vorbestimmte Anzahl von Stufen (BANK ADD PIPELINE 30) und Erzeugen von besonderen Banksteuersignalen (BANK SEL*1 bis BANK SEL 11) in besonderen Stufen erzeugt wird.

13. Verfahren nach Anspruch 10, bei dem das Erzeugen der Setzsignale (SET 0 bis SET 15) bei Schritt (d) den Schritt (dl) zur logischen UND-Verbindung (19) eines ersten Banksteuersignals (BANK SEL*1) und des jeweiligen Wortmarkensignals (BMK) für jeden entsprechenden Teil enthält.

14. Verfahren nach Anspruch 13, bei dem das Selektieren bei Schritt (h) auf der Basis eines zweiten Banksteuersignals (BANK SEL 10) erfolgt.

15. Verfahren nach Anspruch 14, bei dem das Wortmarkensignal (BMK), das durch das Speichern bei Schritt (f) gespeichert wird, in einem Register (BMR 0 bis BMR 15) gespeichert wird, bis es durch ein drittes Banksteuersignal (BANK SEL 11) gelöscht wird.

16. Verfahren nach Anspruch 15, bei dem das Erzeugen bei Schritt (a) das erste Banksteuersignal (BANK SEL*1) als erstes in der Zeit hervorbringt, das zweite Banksteuersignal (BANK SEL 10) als zweites in der Zeit hervorbringt und das dritte Banksteuersignal (BANK SEL 11) als drittes in der Zeit hervorbringt.

17. Verfahren nach Anspruch 10, bei dem durch das Speichern bei Schritt (e) jedes Wort in einem von 2ⁿ Registern (WDR 0 bis WDR 15) gespeichert wird, das durch eines von 2ⁿ Setzsignalen (SET 0 bis SET 15) für jeden Teil (TEIL 0, TEIL 1, TEIL 2, TEIL 3) bezeichnet wird.

18. Verfahren nach Anspruch 10 oder 17, bei dem durch das Speichern bei Schritt (f) jedes Wortmarkensignal (BMK) in einem von 2ⁿ Registern (BMR 0 bis BMR 15) gespeichert wird, das durch eines von 2ⁿ Setzsignalen (SET 0 bis SET 15) für jeden Teil (TEIL 0, TEIL 1, TEIL 2, TEIL 3) bezeichnet wird.

19. Verfahren nach den Ansprüchen 17 und 18, bei dem dann, wenn durch das Speichern bei Schritt (f) ein Wortmarkensignal (BMK) in einem Register (BMR 0 bis BMR 15) gespeichert wird, das Wortmarkensignal (BMK) gespeichert bleibt, bis es durch ein besonders Banksteuersignal (BANK SEL 11) gelöscht wird.

20. Verfahren nach Anspruch 19, bei dem das Verfahren ferner den Schritt (j) zum Empfangen eines Befehlssignals (GO) von der Speichersteuereinheit (MCU 200) umfaßt; und
bei dem durch das Speichern bei Schritt (f) ein Wortmarkensignal (BMK) in einem Register (BMR 0 bis BMR 15) gespeichert wird, wenn das Befehlssignal (GO), das bei Schritt (j) empfangen wird, eine Startbedingung anweist und das Register leer ist.

21. Verfahren nach Anspruch 20, bei dem durch das Speichern bei Schritt (f) das Wortmarkensignal (BMK) gehalten wird, das in dem Register (BMR 0 bis BMR 15) gespeichert ist, wenn das Befehlssignal (GO), das bei Schritt (j) empfangen wird, eine Startbedingung anweist und das Register voll ist.

22. Verfahren nach Anspruch 21, bei dem durch das Speichern bei Schritt (f) das Register (BMR 0 bis BMR 15) gelöscht wird, wenn das Befehlssignal (GO) eine Nichtstartbedingung anweist.

23. Verfahren nach Anspruch 10, bei dem das Selektieren bei Schritt (h) auf der Basis eines besonderen Banksteuersignals (BANK SEL 10) erfolgt.

24. Teilspeichersteuerschaltung nach Anspruch 3, 4 oder 5, bei der das Überschreiben in dem ersten Registermittel (WD REGISTER llb) und eine logische ODER-Verknüpfung in dem zweiten Registermittel (BM REGISTER 10b) ausgeführt werden, wenn der folgende Zugriffsbefehl auf dieselben Daten wie der anfängliche Befehl abzielt.

## Revendications

1. Circuit de commande en stockage partiel destiné à une unité de mémoire (100) comportant un dispositif de mémorisation (102), et permettant d'effectuer un accès en stockage partiel au dispositif de mémorisation (102), le circuit de commande comprenant :
un moyen de lecture (BANK CONTROL 103, RD-REG 22, SEL 23), ayant pour fonction de lire des données de lecture (RD) dans le dispositif de mémorisation (102), le processus de lecture s'étendant sur une durée de temps d'accès du dispositif de mémorisation, ledit moyen de lecture commençant à fonctionner en fonction d'une instruction d'accès initiale produite extérieurement (GO) qui est envoyée à l'unité de mémoire (100) ;
caractérisé par :
un moyen formant un registre (STORE-DATA REG 105, WD-REGISTER 11b ; BM-REGISTER 10b), ayant pour fonction d'enregistrer des données d'écriture initiales (WD) comportant des données de stockage partiel initiales (STD) en fonction de l'instruction d'accès initiale (GO), et ayant pour fonction d'enregistrer des données d'écriture suivantes comportant des données de stockage partiel suivantes avec une opération d'écriture en superposition, avant que ladite durée de temps d'accès n'ait expiré, en fonction d'une instruction d'accès suivante (GO), lesdites données d'écriture initiales, lesdites données d'écriture suivantes et ladite instruction d'accès suivante étant chacune produites à l'extérieur de l'unité de mémoire (100) ;
un moyen de combinaison (SEL 24), ayant pour fonction de combiner lesdites données de lecture avec lesdites données de stockage partiel initiales ét suivantes qui ont été enregistrées et laissées dans ledit moyen registre sur ladite durée de temps d'accès, remplaçant des données précédentes se trouvant dans lesdites données de lecture par lesdites données de stockage partiel initiales et suivantes qui ont été laissées dans ledit moyen registre sur ladite durée le temps d'accès, après que ladite durée de temps d'accès a expiré, et produisant des données de réécriture ; et
un moyen servant à restaurer lesdites données de réécriture dans le dispositif de mémorisation (102).

2. Circuit de commande en stockage partiel selon la revendication 1, où l'unité de mémoire (100) comporte une pluralité de blocs de mémoire (BANK 0 à BANK 15), et l'accès en stockage partiel peut être effectué relativement à chacun des blocs de mémoire, via un procédé d'entrelacement, et où chacune desdites données de lecture, desdites données d'écriture initiales, desdites données d'écriture suivantes et desdites données de réécriture est des données d'un seul mot.

3. Circuit de commande en stockage partiel selon la revendication 2, où ledit moyen registre (STORE-DATA REG 105) comprend :
un premier moyen registre (WD-REGISTER 11b) ayant pour fonction d'enregistrer, en correspondance avec des blocs de mémoire respectifs (BANK 0 à BANK 15), des données d'écriture d'un seul mot comportant lesdites données de stockage partiel initiales en fonction de ladite instruction d'accès initiale, et ayant pour fonction d'enregistrer lesdites données d'écriture d'un seul mot suivantes comportant lesdites données de stockage partiel suivantes avec une opération d'écriture en superposition, avant que ladite durée de temps d'accès n'ait expiré, en fonction d'une instruction d'accès suivante ; et
un deuxième moyen registre (BM REGISTER 10b), ayant pour fonction d'enregistrer, en correspondance avec des blocs de mémoire respectifs (BANK 0 à BANK 15), des données de positionnement servant à désigner les positions desdites données de stockage partiel initiales et suivantes devant être enregistrées respectivement dans ledit premier moyen registre, en fonction de ladite instruction d'accès initiale et desdites instructions d'accès suivantes respectivement, lesdites données de positionnement étant produites à l'extérieur de l'unité de mémoire (100), en correspondance avec lesdites données d'écriture d'un seul mot initiales et suivantes respectivement ; et
où la combinaison, qui est effectuée par ledit moyen de combinaison (SEL 24), est effectuée à l'aide desdites données de positionnement.

4. Circuit de commande en stockage partiel selon la revendication 3, où ledit premier moyen registre (WD-REGISTER 11b) comprend des premiers registres (WDR 0 à WDR 15), en nombre égal à celui des blocs de mémoire (BANK 0 à BANK 15), et un circuit de porte ET (19) ayant pour fonction de produire des signaux de positionnement (SET 0 à SET 15) afin de positionner respectivement lesdites données d'écriture d'un seul mot initiales et suivantes, en correspondant avec les blocs de mémoire.

5. Circuit de commande en stockage partiel selon la revendication 4, où ledit deuxième moyen registre (BM REGISTER 10b) comprend des deuxièmes registres (BMR 0 à BMR 15) et des circuits ET-OU, en nombre égal au nombre de blocs de mémoire (BANK 0 à BANK 15), chacun desdits deuxièmes registres comprenant un circuit basculeur de type D servant à positionner un unique élément de données de positionnement lorsqu'un desdits signaux de positionnement (SET 0 à SET 15) lui est appliqué jusqu'à ce que le circuit basculeur de type D soit repositionné après que ladite durée de temps d'accès a expiré, et chacun desdits circuits ET-OU ayant pour fonction de faire que lesdits circuits basculeurs de type D enregistrent les éléments de données de positionnement jusqu'à ce que ladite durée de temps d'accès ait expiré.

6. Appareil servant à commander un stockage partiel de données en provenance d'une unité de commande de mémoire (MCU 200), ledit appareil comportant un circuit tel que décrit dans la revendication 1 et comprenant :
un circuit (103) de commande de blocs servant à produire une pluralité de signaux de commande de blocs (BANK SEL*1 à BANK SEL 11) ;
une pluralité de parties (STORE DATA REG 105 ; PART 0, PART 1, PART 2, PART 3, PART 4) fonctionnellement couplées au circuit de commande de blocs (103), chaque dite partie comportant :
un circuit ET (19) fonctionnellement couplé audit circuit de commande de blocs (103) et à un signal de repère de mot (BMK) venant de l'unité de commande de mémoire (MCU 200) afin de produire des signaux de positionnement (SET 0 à SET 15) ;
une pluralité de registres de données d'écriture (WDR 0 à WDR 15) fonctionnellement couplés à un signal de mot (STD) venant de l'unité de commande de mémoire (MCU 200) et audit circuit ET (19) afin de stocker le signal de mot dans celui desdits registres de données d'écriture (WDR 0 à WDR 15) qui a été sélectionné par le signal de positionnement (SET 0 à SET 15) ;
une pluralité de registres de repère de mot (BMR 0 à BMR 15) fonctionnellement couplés au signal de repère de mot (BMK) venant de l'unité de commande de mémoire (MCU 200) et dudit circuit ET (19) afin de stocker le signal de repère de mot (MBK) dans celui desdits registres de repère de mot (BMR 0 à BMR 15) qui a été sélectionné par le signal de positionnement (SET 0 à SET 15) ;
un sélecteur de données d'écriture (SEL 17b) fonctionnellement couplé à ladite pluralité de registres de données d'écriture (WDR 0 à WDR 15) et audit circuit de commande de blocs (103) afin de sélectionner un registre de données d'écriture (WDR 0 à WDR 15) pour la sortie sur la base des signaux de commande de blocs (BANK SEL 10) ; et
un sélecteur de repère de mot (SEL 16b) fonctionnellement couplé à ladite pluralité de registres de repère de mot (BMR 0 à BMR 15) et audit circuit de commande de blocs (103) afin de sélectionner un registre de repère de mot (BMR 0 à BMR 15) pour la sortie sur la base des signaux de commande de blocs (BANK SEL 10).

7. Appareil selon la revendication 6, où ledit circuit de commande de blocs (103) comporte une pluralité de circuits retardateurs (BANK-ADD PIPELINE 30) servant à produire au moins un premier signal de commande de blocs (BANK SEL*1) en premier dans le temps et un deuxième signal de commande de blocs (BANK SEL 10) en deuxième dans le temps.

8. Appareil selon la revendication 7, où ledit circuit ET (19) répond au premier signal de commande de blocs (BANK SEL*1) venant dudit circuit de commande de blocs (103), et lesdits sélecteurs de données d'écriture et de données de repère de mot (SEL 17b ; SEL 16b) répondent au deuxième signal de commande de blocs (BANK SEL 10) venant dudit circuit de commande de blocs (103).

9. Appareil selon la revendication 6, comprenant en outre une pluralité de sélecteurs (SEL 15b), chaque sélecteur étant fonctionnellement couplé à un registre de repère de mot (BMR 0 à BMR 15) correspondant, au signal de repère de mot (BMK) venant de l'unité de commande de mémoire (MCU 200) et à un signal de commande (GO) venant de l'unité de commande de mémoire (MCU 200), afin de déterminer les données devant être stockées dans le registre de repère de mot (BMR 0 à BMR 15) correspondant sur la base du signal de commande (GO) et des données présentement stockées dans le registre de repère de mot (BMR 0 à BMR 15) correspondant.

10. Procédé de commande de stockage partiel de données, ledit procédé comprenant les opérations suivantes :
(a) produire une pluralité de signaux de commande de blocs (BANK SEL*1 à BANK SEL11) ;
(b) recevoir un nombre de n mots (STD) en provenance d'une unité de commande de mémoire (MCU 200) ;
(c) recevoir un nombre de n signaux de repère de mot (BMK) en provenance de l'unité de commande de mémoire (MCU 200) ;
(d) produire un nombre de n.2ⁿ signaux de positionnement (SET 0 à SET 15) pour n parties (STORE-DATA REG 05 ; PART 0, PART 1, PART 2, PART 3) sur la base des signaux de commande de blocs (BANK SEL*1 à BANK SEL 11) et des signaux de repère de mot (BMK);
(e) stocker des mots respectifs, allant d'un premier à un n^{ième} mot, (STD) reçus lors de l'opération (b) dans des parties respectives, allant d'une première à une n^{ième} partie, (PART 0, PART 1, PART 2, PART 3) sur la base des signaux de positionnement (SET 0 à SET 15) ;
(f) stocker des signaux de repère de mot respectifs, allant d'un premier à un n^{ième} signal, (BMK) reçus lors de l'opération (c) dans des parties respectives, allant d'une première à une n^{ième} partie, (PART 0, PART 1, PART 2, PART 3) sur la base des signaux de positionnement (SET 0 à SET 15) ;
(g) sélectionner dans chaque partie (STORE-DATA REG 105 ; PART 0, PART 1, PART 2, PART 3) l'un des mots, pris entre le premier et le n^{ième} mot, (STD) et l'un des signaux de repère de mot, pris entre le premier et le n^{ième} signal, (BMK) ; et
(h) sélectionner au moins l'un des mots (STD) et des signaux de repère de mot (BMK) qui ont été sélectionnés au cours de l'opération (g) ; puis
(i) répéter les opérations (a) à (h) pour un autre nombre de n mots (STD).

11. Procédé selon la revendication 10,
où ledit procédé comprend en outre l'opération (j) consistant à recevoir un signal d'adressage (ADD) de la part de l'unité de commande de mémoire (MCU 200) ; et
où ladite pluralité de signaux de commande de blocs (BANK SEL*1 à BANK SEL 11) produits au cours de l'opération (a) sont produits sur la base du signal d'adressage (ADD) reçu au cours de l'opération (j).

12. Procédé selon la revendication 11, où chaque signal de la pluralité de signaux de commande de blocs (BANK SEL*1 à BANK SEL 11) produits au cours de l'opération (a) est produit par retardement, d'un nombre prédéterminé d'étages (BANK ADD PIPELINE 30), du signal de commande et par production de signaux de commande de blocs particuliers (BANK SEL*1 à BANK SEL 11) dans des étages particuliers.

13. Procédé selon la revendication 10, où ladite production des signaux de positionnement (SET 0 à SET 15) au cours de l'opération (d) comporte l'opération (d1) qui consiste à faire le produit logique (fonction ET) (19) d'un premier signal de commande de blocs (BANK SEL*1) et du signal de repère de mot (BMK) respectif pour chaque partie respective.

14. Procédé selon la revendication 13, où l'opération de sélection effectuée au cours de l'opération (h) sélectionne sur la base d'un deuxième signal de commande de blocs (BANK SEL 10).

15. Procédé selon la revendication 14, où le signal de repère de mot (BMK) stocké par ladite opération de stockage effectuée au cours de l'opération (f) stocke un signal de repère de mot dans un registre (BMR 0 à BMR 15) jusqu'à ce qu'il soit effacé par un troisième signal de commande de bloc (BANK SEL 11).

16. Procédé selon la revendication 15, où ladite opération de production effectuée au cours de l'opération (a) produit le premier signal de commande de blocs (BANK SEL*1) en premier dans le temps, produit le deuxième signal de commande de blocs (BANK SEL 10) en deuxième dans le temps, et produit le troisième signal de commande de blocs (BANK SEL 11) en troisième dans le temps.

17. Procédé selon la revendication 10, où ladite opération de stockage effectuée au cours de l'opération (e) stocke chaque mot dans celui de 2ⁿ registres (WDR 0 à WDR 15) qui est désigné par l'un des 2ⁿ signaux de positionnement (SET 0 à SET 15) pour chaque partie (PART 0, PART 1, PART 2, PART 3).

18. Procédé selon la revendication 10 ou 17, où l'opération de stockage effectuée au cours de l'opération (f) stocke chaque signal de repère de mot (BMK) dans celui de 2ⁿ registres (BMR 0 à BMR 15) qui est désigné par l'un des 2ⁿ signaux de positionnement (SET 0 à SET 15) pour chaque partie (PART 0, PART 1, PART 2, PART 3).

19. Procédé selon les revendications 17 et 18, où, lorsque ladite opération de stockage effectuée pendant l'opération (f) stocke un signal de repère de mot (BMK) dans un registre (BMR 0 à BMR 15), le signal de repère de mot (BMK) reste stocké jusqu'à ce qu'il soit effacé par un signal de commande de blocs particulier (BANK SEL 11).

20. Procédé selon la revendication 19,
où ledit procédé comprend en outre l'opération (j) consistant à recevoir un signal d'instruction (GO) en provenance de l'unité de commande de mémoire (MCU 200) ; et
où l'opération de stockage effectuée au cours de l'opération (f) stocke un signal de repère de mot (BMK) dans un registre (BMR 0 à BMR 15) lorsque le signal d'instruction (GO) reçu lors de l'opération (j) commande un état "GO" et que le registre est vide.

21. Procédé selon la revendication 20, où ladite opération de stockage effectuée au cours de l'opération (f) garde le signal de repère de mot (BMK) stocké dans le registre (BMR 0 à BMR 15) lorsque le signal d'instruction (GO) reçu au cours de l'opération (j) commande une condition "GO" et que le registre est plein.

22. Procédé selon la revendication 21, où ladite opération de stockage effectuée au cours de l'opération (f) efface le registre (BMR 0 à BMR 15) lorsque le signal d'instruction (GO) commande une condition inverse de la condition "GO".

23. Procédé selon la revendication 10, où ladite opération de sélection effectuée au cours de l'opération (h) sélectionne sur la base d'un signal de commande de blocs particulier (BANK SEL 10).

24. Circuit de commande en stockage partiel selon la revendication 3, 4 ou 5, où l'opération d'écriture en superposition sur ledit premier moyen registre (WD-REGISTER 11b) et la réunion logique (fonction OU) appliquée sur ledit deuxième moyen registre (BM-REGISTER 10b) sont effectuées lorsque l'instruction d'accès suivante vise les mêmes données que celles visées par l'instruction initiale.
